# EUROPEAN PATENT APPLICATION

(11) **EP 4 629 425 A1**
(43) Date of publication of application: **08.10.2025**
(21) Application number: 23943370.9
(22) Date of filing: 05.12.2023
(51) Int. Cl.: H01M 50/446, H01M 50/417, H01M 50/451, H01M 10/052

(54) **SEPARATOR AND PREPARATION METHOD THEREFOR, LITHIUM ION BATTERY, AND ELECTRIC DEVICE**

(30) Priority: 30.06.2023 CN 202310798215
(71) Applicant: Contemporary Amperex Technology Co., Limited, Ningde, Fujian 352100 (CN)
(72) Inventor: WU, Kai, Ningde, Fujian 352100 (CN); CHEN, Aosai, Ningde, Fujian 352100 (CN); JIANG, Hao, Ningde, Fujian 352100 (CN); YANG, Chenglong, Ningde, Fujian 352100 (CN); GAO, Jingyu, Ningde, Fujian 352100 (CN); ZHANG, Haiming, Ningde, Fujian 352100 (CN)
(74) Representative: Kraus & Lederer PartGmbB
(86) International application number: PCT/CN2023/136286
(87) International publication number: WO 2025/000894

(57) **Abstract**

Disclosed in the examples of the present application are a separator, a preparation method therefor, a lithium-ion battery, and an electric device. The separator includes a separation film and a coating provided on at least one side of the separation film; and the coating includes a metal salt, the metal salt includes metal ions, and the metal ions have a reduction potential higher than that of lithium ions. Application of the separator to the lithium-ion battery can effectively suppress lithium plating, and help improve the cycling performance of the lithium-ion battery.

## Description

### CROSS-REFERENCE TO RELATED APPLICATIONS

This patent document claims priority to and benefit of Chinese Patent Application No. 202310798215.1 filed on June 30, 2023 and entitled "Separator, Preparation Method therefor, Lithium-ion Battery, and Electric Device". The entire content of the above-described patent application is incorporated into a part of the disclosure of this patent document by reference.

### TECHNICAL FIELD

The present application relates to the battery field, and in particular, to a separator, a preparation method therefor, a lithium-ion battery, and an electric device.

### BACKGROUND

In recent years, lithium-ion batteries have been widely used in energy storage power systems such as hydraulic, thermal, wind, and solar power stations, as well as in various fields of electric tools, electric bicycles, electric motorcycles, electric vehicles, military equipment, aerospace, etc., leading to significant advancements.

During cycling of a lithium-ion battery, the phenomenon of lithium plating tends to occur on a negative electrode plate due to factors such as increasing internal resistance of the battery and uneven current density distribution on the electrode plate. In severe cases, this may lead to the growth of lithium dendrites, posing a threat to the reversible capacity and cycle life of the lithium-ion battery. Therefore, how to mitigate lithium plating of lithium-ion batteries is an urgent technical problem to be solved.

### SUMMARY

The present application is proposed in view of the above-described technical problems, and is intended to provide a separator, a preparation method therefor, a lithium-ion battery, and an electric device. Application of the separator to the lithium-ion battery can effectively suppress lithium plating, and help improve the cycling performance of the lithium-ion battery.

According to a first aspect, a separator is provided, where the separator comprises a separation film and a coating provided on at least one side of the separation film; and the coating comprises a metal salt, the metal salt comprises metal ions, and the metal ions have a reduction potential higher than that of lithium ions.

In the examples of the present application, by providing the coating comprising the metal salt on the at least one side of the separation film, free metal ions are enabled to be present in an electrolyte after the separator is applied to the lithium-ion battery. When lithium plating occurs on a negative electrode plate of the lithium-ion battery, a potential at a position with the lithium plating appears to be low. The free metal ions in the electrolyte can move freely to a position with a relatively low potential on the negative electrode plate to form a local electrostatic field with positive charges, so that the current density on the negative electrode plate is made uniform to suppress lithium plating. In this way, the separator provided by the present application can effectively suppress lithium plating to reduce a side reaction during cycling of the lithium-ion battery, thereby helping improve the cycling performance of the lithium-ion battery and improve the coulombic efficiency of the lithium-ion battery.

In a possible embodiment, a difference between the reduction potential of the metal ions and that of the lithium ions is less than or equal to 0.8 V.

In a possible embodiment, the metal salt comprises at least one of a sodium salt, a potassium salt, a calcium salt, a magnesium salt, and a cesium salt.

In a possible embodiment, the metal salt comprises anions, and the anions comprise one or a plurality of a fluorine element, a phosphorus element, a sulfur element, and a nitrogen element.

In a possible embodiment, the solubility S of the metal salt in an electrolyte satisfies the following: 0.0006 g/mL ≦ S; and optionally, 0.005 g/mL ≦ S ≦ 0.06 g/mL.

In the examples of the present application, by controlling the solubility of the metal salt to be within an appropriate range, the amount of the metal salt dissolvable on the separator can be controlled, thereby helping improve the mechanical strength of the separator.

In a possible embodiment, the powder compaction density ρ of the coating satisfies the following: 0.5 g/cm³ ≦ ρ ≦ 5.0 g/cm³; and optionally, 1.0 g/cm³ ≦ ρ ≦ 2.0 g/cm³.

In a possible embodiment, the thickness d of the coating satisfies the following: 0.01 µm ≦ d ≦ 200 µm; and optionally 0.5 µm ≦ d ≦ 50 µm.

In the examples of the present application, by controlling the powder compaction density ρ and the thickness of the coating to be within appropriate ranges, the amount of the metal salt dissolved on the separator can be controlled, thereby helping improve the mechanical strength of the separator.

In a possible embodiment, the separation film comprises at least one of a polyolefin film, a polyester film, a cellulose film, a polyimide film, a polyamide film, a spandex film, and an aramid film.

In a possible embodiment, based on the total mass of the coating, the mass content a of the metal salt satisfies the following: 10% ≦ a ≦ 90%; and optionally, 40% ≦ a ≦ 90%.

In the examples of the present application, by controlling the content of the metal salt on the separator to be within an appropriate range, the content of the metal ions in the electrolyte can be controlled within an appropriate range, thereby further suppressing lithium plating in the lithium-ion battery and helping improve the cycling performance and the coulombic efficiency of the lithium-ion battery.

In a second aspect, a method for preparing a separator is provided, where the method comprises: providing a coating on at least one side of a separation film to obtain the separator; where the coating comprises a metal salt, the metal salt comprises metal ions, and the metal ions have a reduction potential higher than that of lithium ions.

In a possible embodiment, the providing a coating on at least one side of the separation film comprises: preparing a slurry, where the slurry comprises the metal salt; coating the at least one side of the separation film with the slurry; drying the slurry to form a coating layer on the separation film; and roll pressing the separation film and the coating layer to obtain the separator.

In a possible embodiment, the roll pressing the separation film and the coating layer comprises: roll pressing the separation film and the coating layer at a pressure of 2 MPa to 70 MPa; and optionally, roll pressing the separation film and the coating layer at a pressure of 10 MPa to 35 MPa.

According to a third aspect, a lithium-ion battery is provided, where the lithium-ion battery comprises the separator according to any one of the possible embodiments of the first aspect; and/or the separator prepared by using the method according to any one of the possible embodiments of the second aspect.

In a possible embodiment, the lithium-ion battery comprises an electrolyte, where the electrolyte comprises the metal ions.

In a possible embodiment, based on the total mass of the electrolyte, the mass content b of the metal ions satisfies the following: 0.02% ≦ b ≦ 30%; and optionally, 0.03% ≦ b ≦ 6%.

According to a fourth aspect, an electric device is provided, where the electric device comprises the lithium-ion battery according to any one of the possible embodiments of the third aspect.

### DESCRIPTION OF DRAWINGS

In order to more clearly illustrate the technical solutions of the examples of the present application, the drawings required to be used in the examples of the present application will be briefly introduced below. Obviously, the drawings described below are only some examples of the present application. For persons of ordinary skill in the art, other drawings can also be obtained from the drawings without creative work.
FIG. 1 is a schematic flowchart of a method for preparing a separator according to the present application.
FIG. 2 is another schematic flowchart of a method for preparing a separator according to the present application.
FIG. 3 is a schematic diagram of a single battery cell of a lithium-ion battery.
FIG. 4 is a schematic diagram of a battery module of a lithium-ion battery.
FIG. 5 is a schematic diagram of a lithium-ion battery.
FIG. 6 is another schematic diagram of a lithium-ion battery.

### DESCRIPTION OF EMBODIMENTS

Hereinafter, the embodiments of a separator, a preparation method therefor, a lithium-ion battery, and an electric device of the present application are specifically disclosed and described below in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand the present application, and are not intended to limit subject matters described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present application, unless otherwise specified, a numerical range "a-b" represents an abbreviated representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

In the descriptions of the present application, it should be noted that, unless otherwise noted, "a plurality of" means two or more; and an orientation relationship or a position relationship indicated by terms "upper", "lower", "left", "right", "inside", and "outside" is merely for ease of describing the present application and simplifying the description, rather than indicating or implying that a specified apparatus or element necessarily has a specific orientation or is constructed and operated in a specific orientation. Therefore, the terms should not be construed as a limitation on the present application. In addition, the terms "first", "second", "third", and the like are used merely for description purposes, and should not be understood as an indication or implication of relative importance.

In the present application, the term "or" is inclusive, unless specifically stated otherwise. For example, the phrase "A or B" means "A, B, or both A and B". More specifically, the condition "A and/or B" is satisfied by either A being true (or present) and B being false (or absent), A being false (or absent) and B being true (or present), or both A and B being true (or present).

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, all embodiments and optional embodiments of the present application may be combined with each other to form new technical solutions.

Unless otherwise expressly specified, the following terms have the meanings below. Any undefined terms have art-recognized meanings thereof.

As mentioned, "reduction potential" refers to an electrode potential of a substance relative to a standard hydrogen electrode. Specifically, the reduction potential is an electrode potential of the substance measured by making the substance and a standard hydrogen electrode into a primary cell.

As mentioned, "metal salt" refers to a compound consisting of metal cations and anions.

The following describes the examples of the present application.

In recent years, secondary batteries have been widely used in various fields of electric tools, electronic products, electric vehicles, aerospace, etc. due to relative high energy densities and relatively long service life thereof, leading to great development. Generally, a secondary battery includes a positive electrode plate, a negative electrode plate, an electrolyte, and a separator. During charging and discharging of the battery, active ions are intercalated and deintercalated back and forth between the positive electrode plate and the negative electrode plate. The electrolyte functions to conduct the active ions between the positive electrode plate and the negative electrode plate. The separator is provided between the positive electrode plate and the negative electrode plate to allow the active ions to pass therethrough while preventing positive and negative electrodes from being short-circuited, so that an electrochemical reaction of the secondary battery proceeds properly.

A lithium-ion battery is taken as an example. The lithium-ion battery is a typical secondary battery, and is also referred to as a rocking chair battery as it is charged and discharged by means of a chemical reaction in which lithium ions are intercalated and deintercalated between positive and negative electrodes. During charging of the lithium-ion battery, the lithium ions are deintercalated from a positive electrode active material, move to the negative electrode through conduction of an electrolyte, and are intercalated into a negative electrode active material. During discharging, the lithium ions are deintercalated from the negative electrode active material, move to the positive electrode through conduction of the electrolyte, and are intercalated into the positive electrode active material.

It should be understood that the process of "lithiation" or "intercalation" described in the present application refers to a process in which lithium ions are intercalated into a positive electrode active material or a negative electrode active material due to an electrochemical reaction, and the process of "deintercalation", "delithiation", and "stripping" described in the present application refers to a process in which lithium ions are deintercalated from a positive electrode active material or a negative electrode active material due to an electrochemical reaction.

During cycling of a lithium-ion battery, the process of intercalating lithium ions into a negative electrode active material is hindered due to limitation by factors such as a battery preparation process, battery aging, etc., and the phenomenon of lithium plating will occur on a surface of a negative electrode plate. The lithium metal precipitated on the surface of the negative electrode plate is likely to be dendritic. With further occurrence of lithium plating, lithium dendrites grow, and may pierce an SEI (Solid electrolyte interface, solid electrolyte interface) film in severe cases to cause a side reaction with an electrolyte, consuming active lithium ions in the battery, and degrading the reversible capacity and cycle life of the battery. Once the lithium dendrites pierce a separator, a serious safety issue may further arise.

In view of this, the examples of the present application provide a separator, a preparation method therefor, a lithium-ion battery, and an electric device. The separator includes a separation film provided with a coating, and the coating includes a metal salt. When the separator is used in a lithium-ion battery, the metal salt may dissolve or partially dissolve in an electrolyte, such that free metal ions are present in the electrolyte. The free metal ions can move freely to a position with a relatively low potential on a negative electrode plate, i.e., a position at which lithium plating tends to occur or has already occurred. Electrostatic screening is formed at this position, so that the current density on the negative electrode plate is made uniform to suppress lithium plating.

First, a separator is provided, and includes a separation film and a coating provided on at least one side of the separation film. The coating includes a metal salt, the metal salt includes metal ions, and the metal ions have a reduction potential higher than that of lithium ions.

Specifically, when the separator is used in a lithium-ion battery, the metal salt in the coating may dissolve or partially dissolve in an electrolyte, such that free metal ions are present in the electrolyte. During cycling of the lithium-ion battery, these metal ions can move freely to a region with a relatively low potential on a negative electrode plate to form a local electrostatic field with a high concentration of positive charges in this region, so that electrostatic screening is formed and the current density on the negative electrode plate is made uniform.

In the examples, by introducing the coating including the metal salt into the separator, the non-uniformity of the current density on the electrode plate during cycling of the lithium-ion battery can be effectively alleviated to mitigate lithium plating. In this way, a side reaction during cycling of the lithium ions is reduced, thereby helping improve the cycling performance and the coulombic efficiency of the lithium-ion battery.

Generally, a lithium-ion battery includes a positive electrode plate, a negative electrode plate, an electrolyte, and a separator. The following describes the lithium-ion battery provided in the present application and various parts of the lithium-ion battery.

### [Positive electrode plate]

The negative electrode plate generally includes a negative electrode current collector and a negative electrode active material layer provided on at least one surface of the negative electrode current collector.

As an example, the negative electrode current collector has two opposite surfaces in its own thickness direction, and the negative electrode active material layer is provided on either one or both of the two opposite surfaces of the negative electrode current collector.

In an example, the negative electrode current collector may employ a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In an example, the negative electrode active material may be a negative electrode active material well-known in the art for batteries. As an example, the negative electrode active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and another conventional material that can be used as a negative electrode active material of a battery may also be used. These negative electrode active materials may be used alone or in combination of two or more thereof.

In an example, the negative electrode active material layer further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In an example, the negative electrode active material layer further includes a conductive agent. The conductive agent may be selected from at least one of superconducting carbon, acetylene black, carbon black, ketjen black, carbon dots, carbon nanotubes, graphene, and carbon nanofibers.

In an example, the negative electrode active material layer further includes another auxiliary agent, e.g., a thickening agent (e.g., sodium carboxymethyl cellulose (CMC-Na)).

In an example, the negative electrode plate may be prepared in the following manner: forming a negative electrode slurry from the constituents described above for preparing the negative electrode plate. For example, a negative electrode active material, a conductive agent, a binder, and any other constituent are dispersed in a solvent (e.g., N-methylpyrrolidone) to form a negative electrode slurry. Then, the negative electrode slurry is coated on a negative electrode current collector, and a negative electrode plate can be obtained after operations such as drying and roll pressing.

### [Positive electrode plate]

The positive electrode plate generally includes a positive electrode current collector and a positive electrode active material layer provided on at least one surface of the positive electrode current collector.

As an example, the positive electrode current collector has two opposite surfaces in its own thickness direction, and the positive electrode active material layer is provided on either one or both of the two opposite surfaces of the positive electrode current collector.

In an example, the positive electrode current collector may employ a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In an example, the positive electrode active material may be a positive electrode active material well-known in the art for batteries. As an example, the positive electrode active material may include at least one of olivine-structured lithium-containing phosphate, lithium-transition metal oxide, and their respective modifying compounds. However, the present application is not limited to these materials, and other conventional materials that can be used as a positive electrode active material of a battery may also be used. These positive electrode active materials may be used alone or in combination of two or more thereof. Examples of the lithium-transition metal oxide may include, but are not limited to, at least one of lithium cobalt oxide (e.g., LiCoO₂), lithium nickel oxide (e.g., LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also simply referred to as NCM333), LiNi_{0.5}Co_{0.2}Mn_{0.3}O₂ (also simply referred to as NCM523), LiNi_{0.5}Co_{0.25}Mn_{0.25}O₂ (also simply referred to as NCM211), LiNi_{0.6}Co_{0.2}Mn_{0.2}O₂ (also simply referred to as NCM622), LiNi_{0.8}Co_{0.1}Mn_{0.1}O₂ (also simply referred to as NCM811)), lithium nickel cobalt aluminum oxide (e.g., LiNi_{0.85}Co_{0.15}Al_{0.05}O₂), modifying compounds thereof, and the like. Examples of the olivine-structured lithium-containing phosphate may include, but are not limited to, at least one of lithium iron phosphate (e.g., LiFePO₄ (which may also be simply referred to as LFP)), a composite of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon. Intercalation and deintercalation and consumption of Li occur during charging and discharging of a battery, and the molar content of Li varies when the battery is discharged to different states. In the enumeration of a positive electrode active material in the present application, the molar content of Li is an initial state of the material, i.e., a pre-application state. The positive electrode active material is applied to a battery system, and the molar content of Li changes after charging and discharging cycles. In the enumeration of a positive electrode active material in the present application, the molar content of O is merely a theoretical state value, the molar content of O changes due to the release of oxygen from a lattice, and the actual molar content of O fluctuates.

In an example, the positive electrode active material layer further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In an example, the positive electrode active material layer further includes a conductive agent. As an example, the conductive agent may include at least one of superconducting carbon, acetylene black, carbon black, ketjen black, carbon dots, carbon nanotubes, graphene, and carbon nanofibers.

In an example, the positive electrode plate may be prepared in the following manner: forming a positive electrode slurry from the constituents described above for preparing the positive electrode plate. For example, a first positive electrode active material and/or a second positive electrode active material, a conductive agent, a binder, and any other constituent are dispersed in a solvent (e.g., N-methylpyrrolidone) to form a positive electrode slurry. Then, the positive electrode slurry is coated on a positive electrode current collector, and a positive electrode plate can be obtained after operations such as drying and roll pressing.

### [Electrolyte]

The electrolyte functions to conduct ions between the positive electrode plate and the negative electrode plate. The type of the electrolyte is not specifically limited in the present application, and may be selected as needed. The electrolyte includes an electrolyte salt and a solvent.

In an example, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In an example, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In an example, the electrolyte may further include an additive, and the additive may include a negative electrode film-forming additive and a positive electrode film-forming additive, and may further include an additive capable of improving specific performance of the battery, e.g., an additive improving overcharge performance of the battery, an additive improving high-temperature or low-temperature performance of the battery, and the like.

### [Separator]

An example of the present application provides a separator. The separator includes a separation film and a coating provided on at least one side of the separation film.

The coating includes a metal salt, the metal salt includes metal ions, and the metal ions have a reduction potential higher than that of lithium ions.

Specifically, the metal salt can dissolve or partially dissolve in the electrolyte, such that free metal ions are present in the electrolyte. The free metal ions can form electrostatic screening in a region with a relatively low potential on the negative electrode plate, thereby suppressing lithium plating and improving the cycling performance and coulombic efficiency of the lithium-ion battery.

It should be understood that the structure and type of the separation film are not particularly limited in the present application, and any well-known porous separation film with good chemical stability and mechanical stability may be used. The separation film may include a base film and a functional coating provided on at least one side of the base film. For example, the functional coating is a CCS coating or a PCS coating.

In an example, the metal salt includes at least one of a sodium salt, a potassium salt, a calcium salt, a magnesium salt, and a cesium salt.

In an example, the metal salt includes anions, and the anions include one or a plurality of a fluorine element, a phosphorus element, a sulfur element, and a nitrogen element.

Specifically, after the metal salt dissolves or partially dissolves in the electrolyte, the electrolyte further includes free anions, and these free anions may be involved in forming an SEI film. Therefore, selecting anions including the above-described element is conducive to formation of a uniform and dense SEI film. In cases with lithium plating occurring on the negative electrode plate, a uniform and dense SEI film helps induce uniform deposition of lithium ions, in other words, makes lithium plating more uniform, thereby further suppressing formation or growth of lithium dendrites, and improving the cycling performance and coulombic efficiency of the lithium-ion battery.

Exemplarily, the anions may be acetate ions, nitrate ions, hexafluorophosphate ions, and bisfluorosulfonylimide ions.

In an example, a difference between the reduction potential of the metal ions and that of the lithium-ion battery is less than or equal to 0.8 V.

Specifically, metal ions having a reduction potential close to that of lithium ions may be selected to reduce the possibility of reducing metal ions during cycling of the battery, such that a sufficient amount of free metal ions are present in the electrolyte.

In an example, the solubility S of the metal salt in the electrolyte satisfies the following: 0.0006 g/mL ≦ S; and optionally, 0.005 g/mL ≦ S ≦ 0.06 g/mL.

Specifically, S may be 0.0006 g/mL, 0.0008 g/mL, 0.001 g/mL, 0.002 g/mL, 0.003 g/mL, 0.004 g/mL, 0.005 g/mL, 0.006 g/mL, 0.007 g/mL, 0.008 g/mL, 0.009 g/mL, 0.01 g/mL, 0.015 g/mL, 0.02 g/mL, 0.025 g/mL, 0.03 g/mL, 0.035 g/mL, 0.04 g/mL, 0.045 g/mL, 0.05 g/mL, 0.055 g/mL, 0.06 g/mL, or a value within a range obtained by combining any two of the above-described values.

It should be understood that two cases exist for a dissolution process of the metal salt depending on a dissolution rate of the metal salt in the electrolyte. In one case, the metal salt can rapidly dissolve, and no metal salt or only a small amount of the metal salt remains on the separation film. In the other case, the metal salt gradually dissolves, and a part of the metal salt remains on the separation film.

In the example, by controlling the solubility of the metal salt in the electrolyte to be within an appropriate range, the amount of the metal salt remaining on the separation film can be indirectly controlled. Generally, the metal salt helps improve the mechanical strength of the separation film. Therefore, controlling the solubility of the metal salt in the electrolyte to be within an appropriate range helps improve the mechanical strength of the separator and reduce the risk of the separator being pierced by lithium dendrites.

In an example, the powder compaction density ρ of the coating satisfies the following: 0.5 g/cm³ ≦ ρ ≦ 5.0 g/cm³; and optionally, 1.0 g/cm³ ≦ ρ ≦ 2.0 g/cm³.

Specifically, ρ may be 0.5 g/cm³, 0.55 g/cm³, 0.6 g/cm³, 0.65 g/cm³, 0.7 g/cm³, 0.75 g/cm³, 0.8 g/cm³, 0.85 g/cm³, 0.9 g/cm³, 0.95 g/cm³, 1.0 g/cm³, 1.1 g/cm³, 1.2 g/cm³, 1.3 g/cm³, 1.4 g/cm³, 1.5 g/cm³, 1.6 g/cm³, 1.7 g/cm³, 1.8 g/cm³, 1.9 g/cm³, 2.0 g/cm³, 2.1 g/cm³, 2.2 g/cm³, 2.2 g/cm³, 2.3 g/cm³, 2.4 g/cm³, 2.5 g/cm³, 2.6 g/cm³, 2.7 g/cm³, 2.8 g/cm³, 2.9 g/cm³, 3.0 g/cm³, 3.1 g/cm³, 3.2 g/cm³, 3.3 g/cm³, 3.4 g/cm³, 3.5 g/cm³, 3.6 g/cm³, 3.7 g/cm³, 3.8 g/cm³, 3.9 g/cm³, 4.0 g/cm³, 4.1 g/cm³, 4.2 g/cm³, 4.3 g/cm³, 4.4 g/cm³, 4.5 g/cm³, 4.6 g/cm³, 4.7 g/cm³, 4.8 g/cm³, 4.9 g/cm³, 5.0 g/cm³, or a value within a range obtained by combining any two of the above-described values.

An excessively small powder compaction density ρ of the coating is not conducive to molding of the coating; and an excessively large powder compaction density ρ of the coating is not conducive to sufficient contact between the coating and the electrolyte for dissolution. In addition, a relatively high powder compaction density is conducive to gradual dissolution of the metal salt, so that a part of the metal salt remains on the separation film to improve the mechanical strength of the separator. Therefore, in the example, controlling the powder compaction density ρ of the coating to be within an appropriate range facilitates molding of the coating on the separation film and is conducive to improving the mechanical strength of the separator.

In an example, the thickness d of the coating satisfies the following: 0.01 µm ≦ d ≦ 200 µm; and optionally 0.5 µm ≦ d ≦ 50 µm.

Specifically, d may be 0.01 µm, 0.02 µm, 0.05 µm, 0.1 µm, 0.2 µm, 0.3 µm, 0.4 µm, 0.5 µm, 0.6 µm, 0.7 µm, 0.8 µm, 0.9 µm, 1 µm, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 110 µm, 120 µm, 130 µm, 140 µm, 150 µm, 160 µm, 170 µm, 180 µm, 190 µm, 200 µm, or a value within a range obtained by combining any two of the above-described values.

It should be understood that the thickness d of the coating is subject to factors such as the powder compaction density ρ, the amount of the metal salt added, etc. When other conditions are the same, the thickness d of the coating and the powder compaction density ρ of the coating are in an inversely proportional relationship, and a higher powder compaction density ρ of the coating leads to a smaller thickness d of the coating. When the powder compaction density ρ is fixed, a larger thickness d of the coating indicates a higher content of the metal salt on the separator. Therefore, by controlling the thickness d of the coating, the content of the metal salt on the separator can be indirectly controlled, thereby affecting the amount of the metal salt dissolved in the electrolyte and the amount of the metal salt remaining on the separation film.

In an example, the separation film includes at least one of a polyolefin film, a polyester film, a cellulose film, a polyimide film, a polyamide film, a spandex film, and an aramid film.

In another example, a material of the separation film may be selected from at least one of glass fibers, nonwoven fabrics, polyethylene, polypropylene, and polyvinylidene fluoride.

In an example, the separation film may be a single-layer thin film or may be a multilayer composite thin film, which is not particularly limited. When the separation film is a multilayer composite thin film, materials of each layer may be the same or different, which is not particularly limited.

In an example, based on the total mass of the coating, the mass content a of the metal salt satisfies the following: 10% ≦ a ≦ 90%; and optionally, 40% ≦ a ≦ 90%.

Specifically, a may be 10%, 15%, 20%, 25%, 30%, 35%, 40%, 45%, 50%, 55%, 60%, 65%, 70%, 75%, 80%, 85%, 90%, or a value within a range obtained by combining any two of the above-described values.

In one aspect, the metal salt does not participate in electrochemical reactions for charging and discharging in the lithium-ion battery, and the mass content of the metal salt is excessively high, increasing the mass of the lithium-ion battery without contribution to the capacity, and greatly affecting the energy density of the lithium-ion battery. In another aspect, if the mass content of the metal salt is excessively low, the number of free metal ions in the electrolyte is limited, and the effect of suppressing lithium plating is limited.

In the example, controlling the mass content a of the metal salt to be within an appropriate range can effectively suppress lithium plating while helping reduce the impact of the metal salt on the energy density of the lithium-ion battery.

### [Preparation method]

The following describes a preparation method for the separator in the above-described examples.

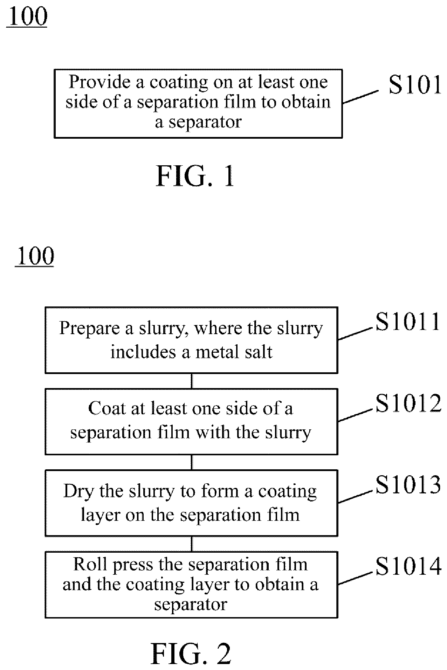

The present application further provides a method for preparing a separator. FIG. 1 is a schematic flowchart of a method for preparing a separator.

As shown in FIG. 1, the method 100 includes:
S101: providing a coating on at least one side of a separation film to obtain the separator.

The coating includes a metal salt, the metal salt includes metal ions, and the metal ions have a reduction potential higher than that of lithium ions.

FIG. 2 is another schematic flowchart of a method for preparing a separator.

Optionally, as shown in FIG. 2, in S101, the providing a coating on at least one side of a separation film includes:
S1011: preparing a slurry, where the slurry includes the metal salt.
S1012: coating the at least one side of the separation film with the slurry.
S1013: drying the slurry to form a coating layer on the separation film.
S1014: roll pressing the separation film and the coating layer to obtain the separator.

Optionally, in S1014, the roll pressing the separation film and the coating layer includes: roll pressing the separation film and the coating layer at a pressure of 2 MPa to 70 MPa.

Optionally, in S1014, the roll pressing the separation film and the coating layer includes: roll pressing the separation film and the coating layer at a pressure of 10 MPa to 35 MPa.

It should be understood that the roll pressing may be performed one time or a plurality of times, and the present application sets no limitation thereto. The roll pressing may be cold roll pressing or hot roll pressing, and the present application sets no limitation thereto.

The pressure for the roll pressing may be 2 MPa, 3 MPa, 4 MPa, 5 MPa, 6 MPa, 7 MPa, 8 MPa, 9 MPa, 10 MPa, 15 MPa, 20 MPa, 25 MPa, 30 MPa, 35 MPa, 40 MPa, 45 MPa, 50 MPa, 55 MPa, 60 MPa, 65 MPa, 70 MPa, or a value within a range obtained by combining any two of the above-described values.

Based on a similar principle, when the separator prepared by using the method 100 is applied to a lithium-ion battery, the electrolyte is enabled to have free metal ions. The corresponding technical effects of the separator described above can be achieved, and details are not described here again.

An example of the present application further provides a lithium-ion battery. The lithium-ion battery includes the separator according to any one of the above-described examples and/or the separator prepared by using the method 100 according to any one of the above-described examples. Based on a similar principle, the lithium-ion battery includes the separator according to the above-described examples. The corresponding technical effects can be achieved, and details are not described here again.

In an example, the lithium-ion battery includes an electrolyte, where the electrolyte includes the metal ions.

In an example, based on the total mass of the electrolyte, the mass content b of the metal ions satisfies the following: 0.02% ≦ b ≦ 30%; and optionally, 0.03% ≦ b ≦ 6%.

Specifically, b may be 0.02%, 0.03%, 0.04%, 0.05%, 0.06%, 0.07%, 0.08%, 0.09%, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 12%, 14%, 16%, 18%, 20%, 22%, 24%, 26%, 28%, 30%, or a value within a range obtained by combining any two of the above-described values.

In an example, a positive electrode plate, a negative electrode plate, and a separator may be made into an electrode assembly through a winding process or a lamination process.

In an example, a battery cell may include an outer package. The outer package may be used to encapsulate the electrode assembly and the electrolyte described above.

In an example, the outer package of the battery cell may be a hard shell, e.g., a hard plastic shell, an aluminum shell, a steel shell, etc. The outer package of the battery cell may alternatively be a pouch, such as a bag-type pouch. The material of the pouch may be plastic, and examples of the plastic include polypropylene, polybutylene terephthalate, and polybutylene succinate.

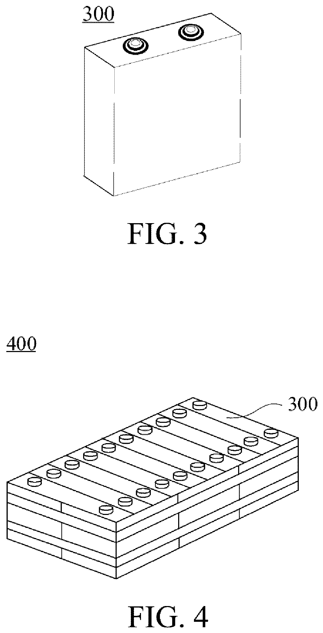

The shape of the battery cell is not particularly limited in the present application, and may be a cylindrical shape, a square shape, or any other shape. For example, FIG. 3 shows a battery cell 300 with a square structure as an example.

It should be understood that the battery cell 300 may include the lithium-ion battery in the above-described examples.

FIG. 4 shows a battery module 400 as an example. Referring to FIG. 4, in the battery module 400, a plurality of battery cells 300 may be arranged sequentially in the length direction of the battery module 400. Certainly, the secondary batteries may alternatively be arranged in any other manner. Further, the plurality of battery cells 300 may be fastened by using fasteners. The plurality of battery cells 300 may be battery cells 300 of the same chemical system or battery cells 300 of different chemical systems.

Optionally, in an example, the battery module 400 may further include a housing having an accommodating space in which the plurality of battery cells 300 are accommodated.

Optionally, in an example, the battery module 400 may be further assembled into a battery, and there may be one or a plurality of battery modules 400 included in the battery. The specific number may be selected by those skilled in the art according to the application and capacity of the battery.

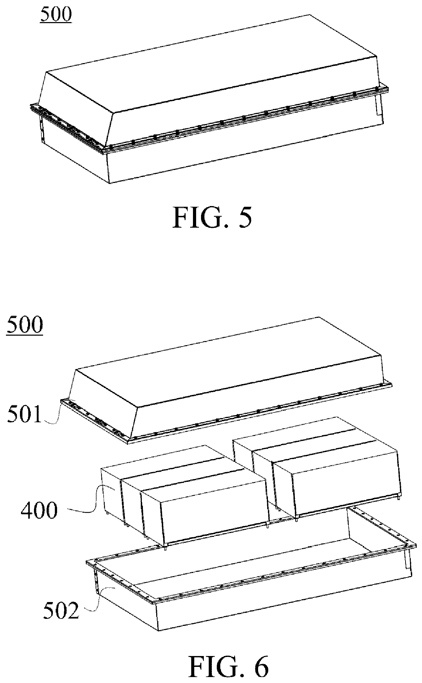

FIG. 5 and FIG. 6 show a battery 500 as an example. Referring to FIG. 5 and FIG. 6, a battery case and a plurality of battery modules 400 disposed in the battery case may be included in the battery 500. The battery case includes an upper case 501 and a lower case 502, the upper case 501 being capable of covering the lower case 502 and forming a closed space for accommodating the battery modules 400. The plurality of battery modules 400 may be arranged in any manner in the battery case.

It should be understood that in some other examples, the battery 500 described above may also be referred to as a battery pack. The battery cells 300 may be first assembled into a battery module 400, and the battery 500 is composed of battery modules 400. Alternatively, the battery 500 may be formed directly from battery cells 300, and an intermediate form of a battery module 400 may be omitted.

In addition, the present application further provides an electric device, including the lithium-ion battery in the above-described examples.

In another example, the electrical device includes at least one of the battery cell 300, the battery module 400, or the battery 500 provided in the present application. The battery cell 300, the battery module 400, or the battery 500 may be used as a power source or an energy storage unit of the electrical device. The electric device may include, but is not limited to, a mobile device (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

For the electric device, the battery cell 300, the battery module 400, or the battery 500 may be selected according to its use needs.

The electric device is used as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the apparatus may be a cell phone, a tablet computer, a notebook computer, or the like. This electric device is generally required to be thin and lightweight, and may use a secondary battery as a power supply.

Examples of the present application are described below. The example described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

### [Examples 1-25 and comparative examples 1-2]

### Example 1

### (1) Preparation of a negative electrode plate

1 kg of synthetic graphite as a negative electrode active material, 10 g of acetylene black as a conductive agent, 30 g of styrene-butadiene rubber (SBR) as a binder, and 20 g of sodium carboxymethyl cellulose (CMC) as a thickener were dissolved in 1 kg of deionized water and uniformly mixed to obtain a negative electrode slurry. Subsequently, the negative electrode slurry was uniformly coated on a copper foil for a negative electrode current collector. A negative electrode plate was obtained after roll pressing and slitting.

### (2) Preparation of a positive electrode plate

1 kg of LiNi₅Co₂Mn₃O₂ as a positive electrode active material, 20 g of carbon nanotubes as a conductive agent, and 20 g of polyvinylidene fluoride (PVDF) as a binder were dissolved in 1 kg of N-methylpyrrolidone and uniformly mixed to obtain a positive electrode slurry. Subsequently, the positive electrode slurry was uniformly coated on an aluminum foil for a positive electrode current collector. A positive electrode plate was obtained after roll pressing and slitting.

### (3) Preparation of a separator

1 kg of potassium nitrate as a metal salt and 20 g of polyvinylidene fluoride (PVDF) as a binder were dissolved in 1 kg of N-methylpyrrolidone and uniformly mixed to obtain a slurry containing the metal salt, and the slurry was uniformly coated on one side of a polyethylene separation film, dried in an oven at 80 °C, and then roll pressed at a pressure of 2 MPa to obtain the separator.

### (4) Preparation of a lithium-ion battery

The positive electrode plate, the separator, and the negative electrode plate were stacked sequentially, such that the separator was sandwiched between the positive electrode plate and the negative electrode plate and can separate the positive electrode plate and the negative electrode plate; then, the stacked components were wound, placed into a casing, and dried, a lithium hexafluorophosphate (LiPF₆) electrolyte with a concentration of 1 mol/L was injected, and the casing was sealed to obtain the lithium-ion battery.

In the separator of Example 1, the metal salt is potassium nitrate, metal ions are potassium ion K ⁺, the solubility of the metal salt in the electrolyte is S = 0.032 g/mL, the powder compaction density ρ of the coating is 1.65 g/cm³, the thickness d of the coating is 2 µm, and the mass content a of the metal salt in the separator is 30%. In the lithium-ion battery of Example 1, the mass content b of the metal salt in the electrolyte is 2.7%.

To verify an effect of suppression of lithium plating by the separator, the lithium-ion battery may be designed with a CB value less than 1.

### Example 2

Compared with Example 1, in Example 2, the metal salt is magnesium nitrate, the metal ions are magnesium ions, S = 0.054 g/mL, and b = 4.7%.

### Example 3

Compared with Example 1, in the separator of Example 3, the metal salt is potassium nitrate and magnesium nitrate, the metal ions are potassium ions and magnesium ions, S = 0.047 g/mL, b = 1.8% and 4.2%.

### Example 4

Compared with Example 1, in Example 4, the metal salt is potassium hexafluorophosphate, S = 0.035 g/mL, and b = 2.9%.

### Example 5

Compared with Example 1, in Example 5, the metal salt is barium sulfate, the metal ions are barium ions, S = 0.0006 g/mL, and b = 0.02%.

### Example 6

Compared with Example 1, in Example 6, the metal salt is calcium sulfate, the metal ions are calcium ions, S = 0.005 g/mL, and b = 0.41%.

### Example 7

Compared with Example 1, in Example 7, the metal salt is sodium nitrate, the metal ions are sodium ions, S = 0.06 g/mL, and b = 5%.

### Example 8

Compared with Example 1, in Example 8, during roll pressing of the separator, the pressure is 0.6 MPa, ρ = 0.5 g/cm³, d = 6.5 µm, and b = 2.73%.

### Example 9

Compared with Example 1, in Example 9, during roll pressing of the separator, the pressure is 1.3 MPa, ρ = 1 g/cm³, d = 3.3 µm, and b = 2.72%.

### Example 10

Compared with Example 1, in Example 10, during roll pressing of the separator, the pressure is 2.4 MPa, ρ = 2 g/cm³, d = 1.6 µm, and b = 2.68%.

### Example 11

Compared with Example 1, in Example 11, during roll pressing of the separator, the pressure is 6.0 MPa, ρ = 5 g/cm³, d = 0.7 µm, and b = 2.65%.

### Example 12

Compared with Example 1, in Example 12, during roll pressing of the separator, the pressure is 30.0 MPa, ρ = 6.5 g/cm³, d = 0.54 µm, and b = 2.63%.

### Example 13

Compared with Example 1, in Example 13, during roll pressing of the separator, the pressure is 70.0 MPa, ρ = 7.8 g/cm³, d = 0.45 µm, and b = 2.55%.

### Example 14

Compared with Example 1, in Example 14, during roll pressing of the separator, the pressure is 10.0 MPa, ρ = 5.4 g/cm³, d = 0.65 µm, and b = 2.66%.

### Example 15

Compared with Example 1, in Example 15, during roll pressing of the separator, the pressure is 35.0 MPa, ρ = 6.7 g/cm³, d = 0.52 µm, and b = 2.62%.

### Example 16

Compared with Example 1, in Example 16, d = 0.1 µm, a = 1.5%, and b = 0.14%.

### Example 17

Compared with Example 1, in Example 17, d = 200 µm, a = 99.9%, and b = 2.7%.

### Example 18

Compared with Example 1, in Example 18, d = 50 µm, a = 96.2%, and b = 2.7%.

### Example 19

Compared with Example 1, in Example 19, d = 0.66 µm, a = 10%, and b = 0.87%.

### Example 20

Compared with Example 1, in Example 20, d = 2.2 µm, a = 40%, and b = 2.7%.

### Example 21

Compared with Example 1, in Example 21, d = 4.95 µm, a = 90%, and b = 2.7%.

### Example 22

Compared with Example 1, in Example 22, d = 0.02 µm, a = 0.25%, and b = 0.02%.

### Example 23

Compared with Example 1, in Example 23, d = 2.0 µm, a = 0.35%, and b = 0.03%.

### Example 24

Compared with Example 1, in Example 24, the metal salt is sodium hexafluorophosphate, the metal ions are sodium ions, S = 0.07 g/mL, d = 3.0 µm, a = 30%, and b = 6%.

### Example 25

Compared with Example 1, in Example 25, the metal salt is bisfluorosulfonylimide, the metal ions are sodium ions, S = 0.4 g/mL, a = 50%, and b = 30%.

### Comparative Example 1

Compared with Example 1, in Comparative Example 1, the separation film of Example 1 is directly used as a separator.

### Comparative Example 2

Compared with Example 1, a process of preparing the separator of Comparative Example 2 is as follows:
20 g of polyvinylidene fluoride (PVDF) was dissolved in 50 g of N-methylpyrrolidone and uniformly mixed to obtain a slurry containing polyvinylidene fluoride, and the slurry was uniformly coated on one side of a polyethylene separation film, dried in an oven at 80 °C, and then roll pressed at a pressure of 2 MPa to obtain the separator. In other words, the separator of Comparative Example 2 includes a coating, but the coating contains no metal salt.

Product parameters of Examples 1-25 and Comparative Examples 1-2 are detailed in Table 1.

**Table 1: product parameters of Examples 1-25 and Comparative Examples 1-2**

| | Metal salt | Metal ion | S (g/mL) | ρ (g/cm³⁾ | d (µm) | a | b | Roll pressing pressure |
|---|---|---|---|---|---|---|---|---|
| Example 1 | Potassium nitrate | Potassium ion | 0.032 | 1.65 | 2 | 30% | 2.7% | 2 MPa |
| Example 2 | Magnesium nitrate | Magnesium ion | 0.054 | 1.65 | 2 | 30% | 4.7% | 2 MPa |
| Example 3 | Potassium nitrate + magnesium nitrate | Potassium ion | 0.047 | 1.65 | 2 | 30% | 1.8% | 2 MPa |
| | | Magnesium ion | | | | | 4.2% | |
| Example 4 | Potassium hexafluorophosphate | Potassium ion | 0.035 | 1.65 | 2 | 30% | 2.9% | 2 MPa |
| Example 5 | Barium sulfate | Barium ion | 0.0006 | 1.65 | 2 | 30% | 0.02% | 2 MPa |
| Example 6 | Calcium sulfate | Calcium ion | 0.005 | 1.65 | 2 | 30% | 0.41% | 2 MPa |
| Example 7 | Sodium nitrate | Sodium ion | 0.06 | 1.65 | 2 | 30% | 5% | 2 MPa |
| Example 8 | Potassium nitrate | Potassium ion | 0.032 | 0.5 | 6.5 | 30% | 2.73% | 0.6 MPa |
| Example 9 | Potassium nitrate | Potassium ion | 0.032 | 1 | 3.3 | 30% | 2.72% | 1.3 MPa |
| Example 10 | Potassium nitrate | Potassium ion | 0.032 | 2 | 1.6 | 30% | 2.68% | 2.4 MPa |
| Example 11 | Potassium nitrate | Potassium ion | 0.032 | 5 | 0.7 | 30% | 2.65% | 6.0 MPa |
| Example 12 | Potassium nitrate | Potassium ion | 0.032 | 6.5 | 0.54 | 30% | 2.63% | 30 MPa |
| Example 13 | Potassium nitrate | Potassium ion | 0.032 | 7.8 | 0.45 | 30% | 2.55% | 70 MPa |
| Example 14 | Potassium nitrate | Potassium ion | 0.032 | 5.4 | 0.65 | 30% | 2.66% | 10 MPa |
| Example 15 | Potassium nitrate | Potassium ion | 0.032 | 6.7 | 0.52 | 30% | 2.62% | 35 MPa |
| Example 16 | Potassium nitrate | Potassium ion | 0.032 | 1.65 | 0.1 | 1.5% | 0.14% | 2 MPa |
| Example 17 | Potassium nitrate | Potassium ion | 0.032 | 1.65 | 200 | 99.9% | 2.7% | 2 MPa |
| Example 18 | Potassium nitrate | Potassium ion | 0.032 | 1.65 | 50 | 96.2% | 2.7% | 2 MPa |
| Example 19 | Potassium nitrate | Potassium ion | 0.032 | 1.65 | 0.66 | 10% | 0.87% | 2 MPa |
| Example 20 | Potassium nitrate | Potassium ion | 0.032 | 1.65 | 2.2 | 40% | 2.7% | 2 MPa |
| Example 21 | Potassium nitrate | Potassium ion | 0.032 | 1.65 | 4.95 | 90% | 2.7% | 2 MPa |
| Example 22 | Potassium nitrate | Potassium ion | 0.032 | 1.65 | 0.02 | 0.25% | 0.02% | 2 MPa |
| Example 23 | Potassium nitrate | Potassium ion | 0.032 | 1.65 | 2 | 0.35% | 0.03% | 2 MPa |
| Example 24 | Sodium hexafluorophosphate | Sodium ion | 0.07 | 1.65 | 2 | 30% | 6% | 2 MPa |
| Example 25 | Sodium bisfluorosulfonylimide | Sodium ion | 0.4 | 1.65 | 3 | 50% | 30% | 2 MPa |
| Comparative Example 1 | / | / | / | / | / | / | / | / |
| Comparative Example 2 | / | / | / | 1.65 | 2 | / | / | 2 MPa |

In Table 1, "S" represents the solubility of the metal salt in the electrolyte, "ρ" represents the powder compaction density of the coating, "d" represents the thickness of the coating, "a" represents the mass content of the metal salt in the coating based on the total mass of the coating, "b" represents the mass content of the metal ions in the electrolyte based on the total mass of the electrolyte, and "Roll pressing pressure" represents a pressure applied to both the separation film and the coating during roll pressing therefor.

Product performance tests of Examples 1-25 and Comparative Examples 1-2 are detailed in Table 2.

**Table 2: product performance tests of Examples 1-25 and Comparative Examples 1-2**

| | Number of cycles | Average coulombic efficiency | Whether lithium dendrites occur |
|---|---|---|---|
| Example 1 | 787 | 98.3 | No |
| Example 2 | 760 | 97.4 | No |
| Example 3 | 795 | 98.6 | No |
| Example 4 | 813 | 99.2 | No |
| Example 5 | 569 | 88.2 | No |
| Example 6 | 613 | 90.1 | No |
| Example 7 | 800 | 98.5 | No |
| Example 8 | 634 | 93.1 | No |
| Example 9 | 735 | 95.6 | No |
| Example 10 | 803 | 98.7 | No |
| Example 11 | 819 | 98.9 | No |
| Example 12 | 813 | 99.1 | No |
| Example 13 | 832 | 99.3 | No |
| Example 14 | 703 | 96.2 | No |
| Example 15 | 797 | 98.6 | No |
| Example 16 | 539 | 91.9 | No |
| Example 17 | 797 | 98.6 | No |
| Example 18 | 822 | 99.1 | No |
| Example 19 | 635 | 93.7 | No |
| Example 20 | 798 | 98.9 | No |
| Example 21 | 836 | 99.3 | No |
| Example 22 | 254 | 83.6 | No |
| Example 23 | 287 | 85.3 | No |
| Example 24 | 747 | 97.7 | No |
| Example 25 | 852 | 99.5 | No |
| Comparative Example 1 | 133 | 73.3 | Yes |
| Comparative Example 2 | 217 | 77.5 | Yes |

In Table 2, "Number of cycles" represents the number of cycles experienced by the lithium-ion battery until an SOH decreases to 80% or below. "Average coulombic efficiency" represents an average value of the ratio of the discharge capacity to charge capacity during cycling of the battery. "Whether lithium dendrites occur" represents whether obvious dendritic lithium plating occurs on the negative electrode plate obtained by disassembling the lithium-ion battery after the cycling of the lithium-ion battery is complete.

According to the comparative analysis of the examples and comparative examples described above, it can be learned that the number of cycles and the average coulombic efficiency in the examples are superior to those of the comparative examples, and lithium dendrites are not found after the cycling of the lithium-ion battery in the examples, but appear after the cycling of the lithium-ion battery in the comparative examples. Therefore, it indicates that by introducing the separator provided in the present application into a lithium-ion battery, lithium plating and growth of lithium dendrites can be effectively suppressed, thereby helping improve the cycling performance and coulombic efficiency of the lithium-ion battery.

It can be learned from the comparative analysis of Examples 1 to 4 that, by providing a metal salt containing a plurality of types of metal ions and having a reduction potential close to that of lithium ions, lithium plating can be effectively suppressed, thereby improving the cycling performance and coulombic efficiency of the lithium-ion battery.

It can be learned from the comparative analysis of Examples 1 and 5 to 7 that, for a metal salt with a relatively low solubility, e.g., metal salts in Examples 5 and 6, the amount of the metal salt can be increased by increasing the thickness or powder compaction density of the coating, thereby achieving the effect of suppressing lithium plating and lithium dendrites. In addition, the amount of a metal salt with a relatively low solubility remaining on the separation film is higher than that of a metal salt with a relatively high solubility. Therefore, selecting a metal salt with a solubility within an appropriate range can suppress lithium plating and lithium dendrites while helping improve the mechanical strength of the separation film.

In one aspect, the thickness and powder compaction density of the coating are relevant to a pressure for roll pressing the coating and the separation film. When other conditions are the same, a higher pressure for roll pressing leads to a smaller thickness and a higher powder compaction density of the coating. In another aspect, when the powder compaction density is relatively large, the dissolution rate of the metal salt in the electrolyte may decrease. Therefore, the mass content of the metal ions in the electrolyte may be subject to the powder compaction density. Therefore, by adjusting the roll pressing pressure, it is possible to obtain coatings with different powder compaction densities and different thicknesses as in Examples 1 and 8 to 15. It can be learned from the comparative analysis of Examples 1 and 8 to 15 that, by controlling the powder compaction density and roll pressing pressure of the coating to be within appropriate ranges, lithium plating and growth of lithium dendrites can be effectively suppressed, thereby improving the cycling performance and coulombic efficiency of the lithium-ion battery.

When other conditions are the same, a larger thickness of the coating leads to an increase of the mass content of the metal salt in the separator. It can be learned from the comparative analysis of Examples 1 and 16 to 18 that, in Example 16, the thickness of the coating is relatively small and the content of the metal salt on the separator is relatively low. To effectively suppress lithium plating and growth of lithium dendrites, the roll pressing pressure can be increased, so as to increase the powder compaction density of the coating, such that a larger amount of the metal salt is loaded on the separation film. Therefore, by controlling the thickness of the coating on the separator to be within an appropriate range, the mass content of the metal salt loaded on the separator can be controlled, thereby effectively suppressing lithium plating and growth of lithium dendrites and improving the cycling performance of the lithium-ion battery.

It can be learned from the comparative analysis of Examples 1 and 19 to 21 that, when other conditions are the same, a larger thickness of the coating leads to a higher mass content of the metal salt in the separator. In one aspect, the number of cycles of the lithium-ion battery increases with the mass content of the metal salt; and in another aspect, the metal salt does not participate in charging and discharging reactions of the lithium-ion battery and thus does not contribute to the capacity. Therefore, controlling the mass content of the metal salt to be within an appropriate range can effectively suppress lithium plating and growth of lithium dendrites while helping reduce the impact of the metal salt on the energy density of the lithium-ion battery.

In general, separators with different mass contents of the metal salt may be selected based on lithium-ion batteries of different models, e.g., lithium-ion batteries with different energy densities. Exemplarily, a lithium-ion battery with a higher energy density is provided with a separator with a higher mass content of the metal salt.

It should be understood that in the lithium-ion battery after the cycling, free metal ions are gradually consumed in the process of suppressing lithium plating, for example, partially precipitated lithium is reduced to elemental metal, or reduced to elemental metal which then forms an alloy with lithium. Therefore, after the cycling of the lithium-ion battery, the mass content of the metal ions in the electrolyte is subject to a plurality of factors such as the mass content of the metal salt in the separator (before the cycling), the number of cycles, etc. For the lithium-ion battery after the cycling, the mass content of the metal ions in the electrolyte is excessively high, indicating that the metal ions are less consumed and the effect of suppressing lithium plating and growth of lithium dendrites is limited. An excessively low mass content of the metal ions in the electrolyte indicates that substantially all of the metal ions are consumed, and it is possible that the amount of the metal salt loaded on the separator does not match the lithium-ion battery, and the effect on lithium plating and growth of lithium dendrites is also limited. Therefore, it can be learned from the comparative analysis of Examples 1 and 22 to 25 that, controlling the mass content of the metal ions in the electrolyte to be within an appropriate range can help improve the effect of suppressing lithium plating and growth of lithium dendrites by the separator.

The following briefly describes test methods for physicochemical parameters and performance parameters involved in the examples of the present application. It should be understood that the following test methods are merely examples, and other test methods known in the art may also be used for testing.

### 1. Test method for a reduction potential

A substance under test is dissolved in an appropriate solvent, and then a battery is formed by using a reference electrode (e.g., a standard hydrogen electrode) and a working electrode (e.g., a glassy carbon electrode). A cyclic voltammetry curve is tested under different conditions (e.g., pH values, temperatures, etc.), and a reduction peak potential of the substance under test is read to obtain a reduction potential of the substance under test.

### 2. Test method for the solubility of a metal salt in an electrolyte

A metal salt is dissolved in 100 mL of a lithium hexafluorophosphate electrolyte with a concentration of 1 mol/L until crystals are precipitated, and the total amount m of the metal salt added is calculated, and the total volume V of the solution at this time is measured. The solubility S may be calculated by using the following formula: S = m/V.

### 3. Test method for a powder compaction density

A separator obtained after roll pressing is cut and weighed (m₁), the thickness of the separator is measured as hi, and the area of the separator is measured as P. Then, a powder coating on a surface is washed off. The separator is re-weighed (m₂) and the thickness thereof is measured (h₂). The compaction density is (m₁-m₂)/(P×(h₁-h₂)).

### 4. Test method for a mass content

A lithium-ion battery is disassembled, the total mass m₃ of a separator is weighed, a coating on a surface of the separator is scraped off, the mass m₄ of a metal salt in the coating and the mass m₅ of the metal salt in an electrolyte are obtained by using an ICP test, and the mass m₆ of the remaining separator is weighed. Based on the total mass of the coating, the mass content of the metal salt is a=(m₄+m₅)/(m₃+m₅-m₆).

### 5. Test method for the number of cycles of a lithium-ion battery

After the formation of a lithium-ion battery, full-charge/full-discharge cycles are performed at a current of 0.33C, and the number of cycles experienced by the battery until an SOH of the battery reaches 80% is counted.

### 6. Test method for average coulombic efficiency of a lithium-ion battery

The coulombic efficiency per cycle is obtained by dividing the discharge capacity per cycle in a cyclic charging/discharging process of a lithium-ion battery by the charging capacity, and then the coulombic efficiency per cycle is added and divided by the number of cycles to obtain the average coulombic efficiency.

### 7. Test method for whether lithium dendrites occur

A lithium-ion battery after cycling is disassembled to obtain a negative electrode plate after the cycling, and it is directly observed whether lithium dendrites occur on the negative electrode plate.

Although the present application has been described with reference to some preferred examples, various modifications to the present application and replacements of the components therein with equivalents can be made without departing from the scope of the present application. In particular, the technical features mentioned in the examples may be combined in any manner provided that there is no structural conflict. The present application is not limited to the specific examples disclosed herein, but includes all technical solutions falling within the scope of the claims.

## Claims

1. A separator, **characterized by** comprising:
a separation film and a coating provided on at least one side of the separation film; wherein
the coating comprises a metal salt, the metal salt comprises metal ions, and the metal ions have a reduction potential higher than that of lithium ions.

2. The separator according to claim 1, wherein a difference between the reduction potential of the metal ions and that of the lithium ions is less than or equal to 0.8 V.

3. The separator according to claim 1 or 2, wherein the metal salt comprises at least one of a sodium salt, a potassium salt, a calcium salt, a magnesium salt, and a cesium salt.

4. The separator according to any one of claims 1 to 3, wherein the metal salt comprises anions, and the anions comprise one or a plurality of a fluorine element, a phosphorus element, a sulfur element, and a nitrogen element.

5. The separator according to any one of claims 1 to 4, wherein the solubility S of the metal salt in an electrolyte satisfies the following: 0.0006 g/mL ≦ S; and optionally, 0.005 g/mL ≦ S ≦ 0.06 g/mL.

6. The separator according to any one of claims 1 to 5, wherein the powder compaction density ρ of the coating satisfies the following: 0.5 g/cm³ ≦ ρ ≦ 5.0 g/cm³; and optionally, 1.0 g/cm³ ≦ ρ ≦ 2.0 g/cm³.

7. The separator according to any one of claims 1 to 6, wherein the thickness d of the coating satisfies the following: 0.1 µm ≦ d ≦ 200 µm; and optionally 0.5 µm ≦ d ≦ 50 µm.

8. The separator according to any one of claims 1 to 7, wherein the separation film comprises at least one of a polyolefin film, a polyester film, a cellulose film, a polyimide film, a polyamide film, a spandex film, and an aramid film.

9. The separator according to any one of claims 1 to 8, wherein based on the total mass of the coating, the mass content a of the metal salt satisfies the following: 10% ≦ a ≦ 90%; and optionally, 40% ≦ a ≦ 90%.

10. A method for preparing a separator, **characterized by** comprising:
providing a coating on at least one side of a separation film to obtain the separator; wherein
the coating comprises a metal salt, the metal salt comprises metal ions, and the metal ions have an oxidation-reduction potential lower than that of lithium ions.

11. The method according to claim 10, wherein the providing a coating on at least one side of the separation film comprises:
preparing a slurry, wherein the slurry comprises the metal salt;
coating the at least one side of the separation film with the slurry;
drying the slurry to form a coating layer on the separation film; and
roll pressing the separation film and the coating layer to obtain the separator.

12. The method according to claim 11, wherein the roll pressing the separation film and the coating layer comprises:
roll pressing the separation film and the coating layer at a pressure of 2 MPa to 70 MPa; and
optionally, roll pressing the separation film and the coating layer at a pressure of 10 MPa to 35 MPa.

13. A lithium-ion battery, **characterized by** comprising the separator according to any one of claims 1 to 9; and/or the separator prepared by using the method according to any one of claims 10 to 12.

14. The lithium-ion battery according to claim 13, comprising an electrolyte, wherein the electrolyte comprises the metal ions.

15. The lithium-ion battery according to claim 14, wherein based on the total mass of the electrolyte, the mass content b of the metal ions satisfies the following: 0.02% ≦ b ≦ 30%; and optionally, 0.03% ≦ b ≦ 6%.

16. An electric device, **characterized by** comprising the lithium-ion battery according to any one of claims 13 to 15.
